# EUROPÄISCHE PATENTSCHRIFT

(11) **EP 2 810 849 B1**
(45) Veröffentlichungstag und Bekanntmachung des Hinweises auf die Patenterteilung: **10.05.2017**
(21) Anmeldenummer: 14401068.3
(22) Anmeldetag: 02.06.2014
(51) Int. Cl.: B62B 3/00, B62B 3/14, B62B 5/04

(54) **Transportwagen**
Transport trolley
Chariot de transport

(30) Priorität: 06.06.2013 DE 102013105873
(43) Veröffentlichungstag der Anmeldung: 10.12.2014
(73) Patentinhaber: Wanzl Metallwarenfabrik GmbH, 89340 Leipheim (DE)
(72) Erfinder: Paul, Jürgen, 87739 Loppenhausen (DE)

(56) Entgegenhaltungen:
- AT-B- 412 080
- DE-A1- 10 355 059
- DE-U1-202009 006 983
- DE-U1-202013 100 310

## Beschreibung

Die Erfindung betrifft einen von Hand bewegbaren, stapelbaren Transportwagen mit den Merkmalen im Oberbegriff des Hauptanspruchs.

Ein solcher Wagen, wie er z.B. in Flughäfen Einsatz findet, ist aus der EP 1 590 224 B1 bekannt. Der Transportwagen ist mit einem Fahrgestell ausgestattet an dem Rollen und eine Ladeplattform angeordnet sind. Das Fahrgestell weist zwei an der Rückseite des Wagens befindliche und nach oben gerichtete Holme auf, an denen eine Schiebeeinrichtung angebracht ist. In den Holmen sind zwei Bremsstangen angeordnet, die durch eine Schiebeeinrichtung beeinflussbar sind. Ferner ist am unteren Ende der Bremsstange ein Bremsteil vorgesehen, das auf die hinteren Rollen des Wagens wirkt und dadurch den Wagen bremst, solange die Schiebeeinrichtung nicht betätigt wird. Um auch eine Reihe an Wagen mit gelöster Bremse auf einfache Art schieben zu können, ist eine Bremslöseeinrichtung zum Anheben des Bremsteils vorgesehen. Die Bremslöseeinrichtung ist unterhalb der Ladeplattform angeordnet und wird beim Stapeln gleicher Wagen ineinander durch ein Auslöseteil betätigt. Die hinteren Rollen des Wagens sind in einer fixen Rollengabel angeordnet. Die Rollen sind hierbei fest auf eine Laufrichtung fixiert.

Aus der US Patentschrift 4,018,449 ist ein stapelbarer Einkaufswagen mit einer Bremse bekannt. Die Bremse ist als Seilzugbremse ausgeführt und wird über den Schiebegriff ausgelöst. Die hinteren Rollen sind in einer unterhalb der Ladeplattform angeordneten Rollengabel wiederum als Bockrollen mit einer Laufrichtung ausgeführt.

Ferner ist aus dem Stand der Technik ein Einkaufwagen bekannt, der mit einer Bremse ausgestattet ist, die beim Stapeln gleicher Wagen gelöst werden kann. Die DE 33 36 678 A1 zeigt einen solchen Wagen.

Darüber hinaus ist aus der DE 30 36 313 C1 eine Lenkrolle mit einer Bremse bekannt. Diese findet Einsatz bei von Hand bewegbaren Transportwagen. Durch das Loslassen des Schiebegriffs wird eine selbsttätige Bremsung der Rolle erzielt. Das Bremsteil kann in Form eines Bremsklotzes oder eines pilzförmigen Bremskopfes ausgeführt sein, der direkt auf die Rolle wirkt. Das Bremsteil ist in dem Lagergehäuse der Rollengabel geführt und wirkt hierbei senkrecht auf die Rollenfläche.

Die DE 103 55 059 A1 zeigt einen Transportwagen gemäß dem Oberbegriff von Anspruch 1.

Der bereits in der EP 1 590 224 B1 beschriebene Wagen soll dahingehend abgeändert werden, dass auch bei Einsatz von Lenkrollen für die hinteren Rollen die Bremswirkung unverändert bestehen bleibt.

Die Aufgabe der vorliegenden Erfindung besteht somit darin, den beschriebenen Transportwagen derart anzupassen, dass eine verbesserte Lenkung bei gleichzeitig bleibender Bremswirkung gewährleistet ist.

Die Erfindung löst die Aufgabe mit den Merkmalen im Hauptanspruch. Weitere vorteilhafte Ausführungen sind in den Unteransprüchen beschrieben.

Durch Verwendung der Lenkrollen ist eine leichtere Lenkung des Wagens gerade im beladenen Zustand gegeben.

Auch ist der Einsatz gebogener Holme möglich, bei gleichbleibender Bremswirkung.

Die Erfindung wird anhand eines Ausführungsbeispiels näher erläutert. Es zeigt
- Fig. 1: einen Transportwagen in perspektivischer Ansicht;
- Fig. 2: eine Detailansicht einer Rollenanbindung mit Bremslöseeinrichtung;
- Fig. 3: eine weitere Detailansicht der Rollenanbindung und separater Bremslöseeinrichtung;
- Fig. 4: die Rollenanbindung mit Bremsteil und Bremslöseeinrichtung in Seitenansicht;
- Fig. 5: die Rollenanbindung - ohne Holm - jedoch mit Bremsstange und Bremslöseeinrichtung;
- Fig. 6a: die Rollenanbindung - ohne Holm - jedoch mit Bremsstange und Bremslöseeinrichtung und Rollengabel;
- Fig. 6b: die Rollenanbindung - ohne Holm - jedoch mit Bremsstange und Bremslöseeinrichtung aber ohne Rollengabel;
- Fig. 7a: ein Verbindungsteil mit Holm in perspektivischer Ansicht;
- Fig. 7b: das Verbindungsteil in perspektivischer Ansicht - von oben;
- Fig. 7c: das Verbindungsteil in perspektivischer Ansicht - von unten;
- Fig. 7d: das Verbindungsteil in Seitenansicht.

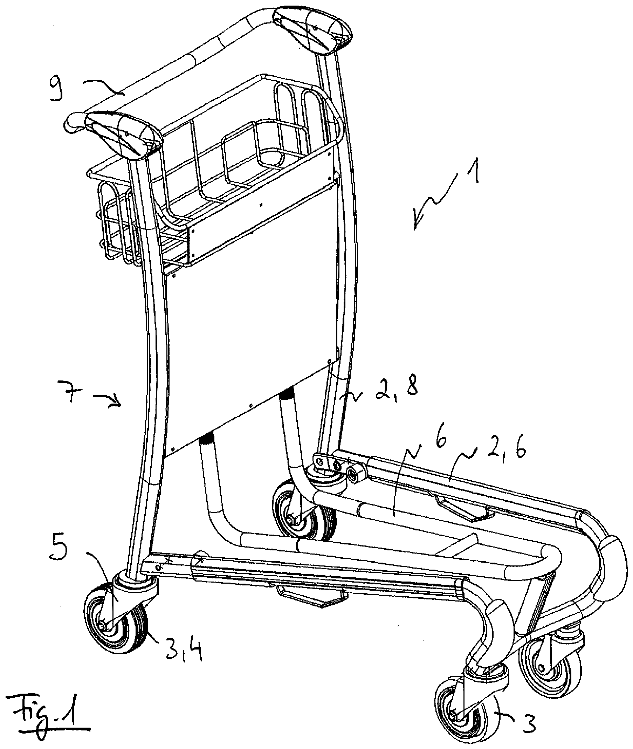

Die Erfindung betrifft einen von Hand bewegbaren und stapelbaren Transportwagen 1 mit einem Fahrgestell 2 an dem Rollen 3 und eine Ladeplattform 6 angeordnet sind. Ein solcher Wagen ist in Figur 1 exemplarisch dargestellt. Das Fahrgestell 2 weist ferner zwei an der Rückseite 7 des Wagens befindliche, nach oben gerichtete Holme 8 auf. An diesen ist eine Schiebeeinrichtung 9 angebracht. In den nach oben gerichteten Holmen 8 sind zwei Bremsstangen 10 angeordnet, die durch eine Schiebeeinrichtung 9 beeinflussbar sind. Ferner ist am unteren Ende 11 der Bremsstange 10 ein Bremsteil 12 vorgesehen, das auf die hinteren Rollen 3, 4 wirkt. Darüber hinaus ist jeweils eine Bremslöseeinrichtung 13 zum Anheben des Bremsteils 12 vorgesehen. Um eine leichtere Lenkbarkeit zu gewährleisten, sind die hinteren Rollen 3, 4 als Lenkrollen ausgeführt.

Es hat sich als vorteilhaft erwiesen, wenn die Holme 8 leicht in Fahrtrichtung gebogen ausgeführt sind. Das Bremsgestänge 10 weist hierfür eine beliebige Anzahl an Gelenken auf. Ein solcher Wagen 1 ist in Figur 1 dargestellt.

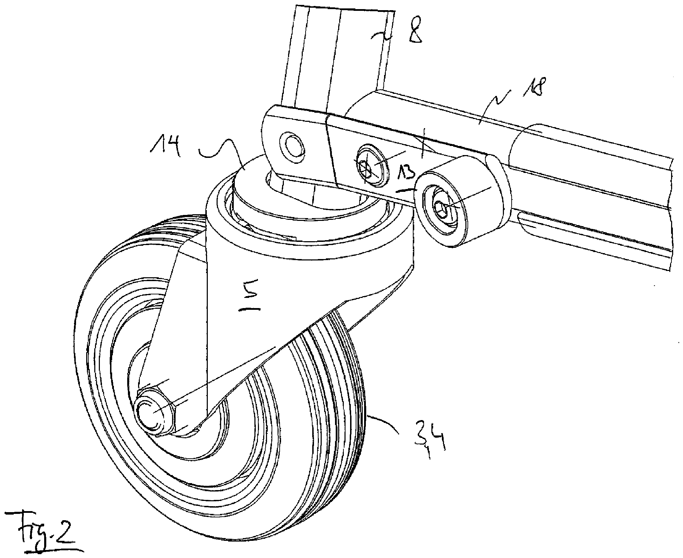

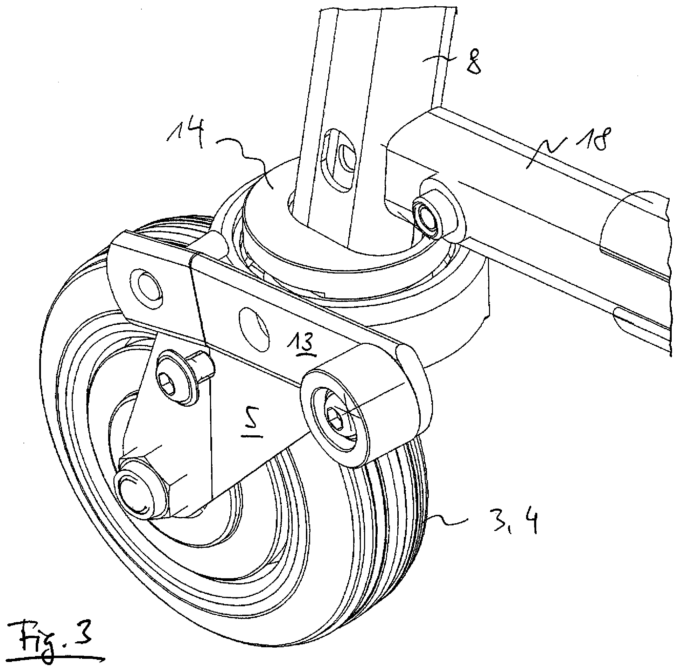

Wie auch Figuren 2 und 3 verdeutlichen, ist die Bremslöseeinrichtung 13 an Bremsstange 10 und Fahrgestell 2 angeordnet.

Hierbei muss die drehbare Anordnung gewährleistet sein, damit die Bremse durch das Anheben der Bremslöseeinrichtung 13 gelöst werden kann. Dies wird durch die Anordnung der Bremslöseeinrichtung 13 am waagrechten Holm 18 erzielt. Die hierfür gewählte Fixierung bildet den Drehpunkt der Bremslöseeinrichtung 13. Wie in Figur 3 gezeigt ist, besteht die Öffnung am senkrechten Holm 8 aus einer ovalförmigen Ausnehmung, so dass eine Beweglichkeit in senkrechter Richtung zum Verschieben der Bremsstange 10 und Anheben des Bremsteils 12 gegeben ist.

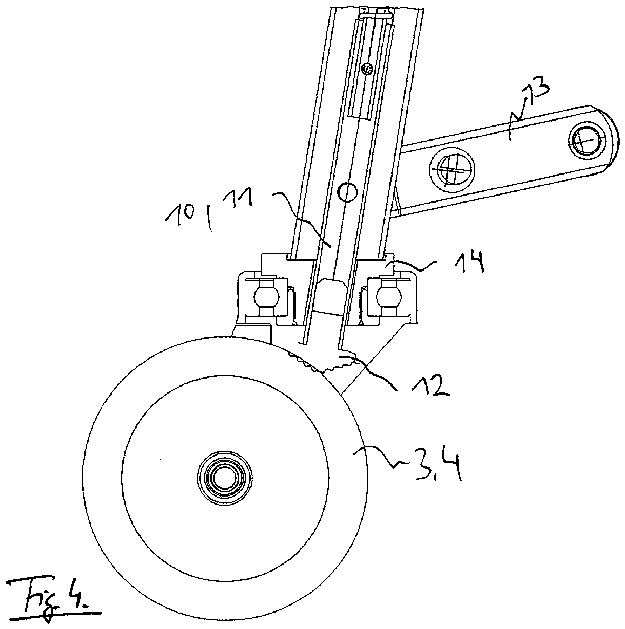

Bedingt durch die leicht gebogene Ausführung der Holme 8, wirkt das Bremsteil 12 auf die hintere Rolle 4. Dies verdeutlicht auch Figur 4.

Wie die Darstellungen 2 bis 4 zeigen, ist am Ende des Holms 8 zur Anbindung an die mit einer Rollengabel 5 versehene hintere Rolle 4 ein Verbindungsteil 14 vorgesehen.

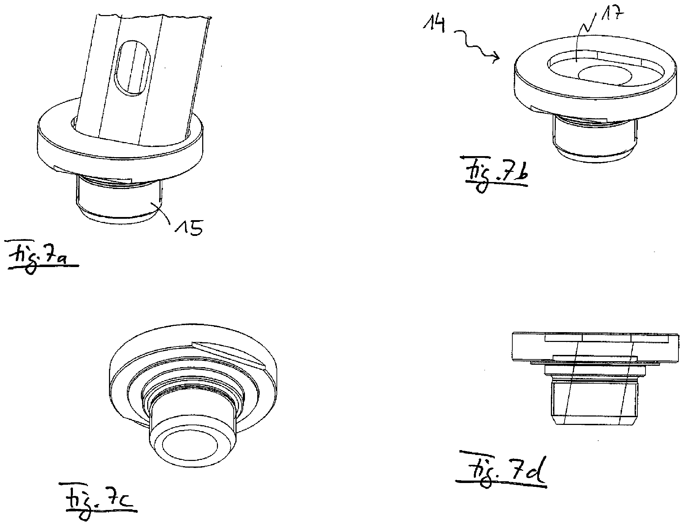

Das Verbindungsteil 14, wie es in den Figuren 7 a bis 7 d dargestellt ist, wird im unteren Bereich 15 mittels Presspassung in der Rollengabel 5 aufgenommen. Im oberen Bereich 16 weist das Verbindungsteil 14 eine Vertiefung 17 zur formschlüssigen Aufnahme des Holmes 8 auf. Zusätzlich wird das Verbindungsteil 14 im oberen Bereich 16 mit dem Holm 8 umlaufend verschweißt.

Das Verbindungsteil 14 kann als Druckgussteil, Drehteil oder Frästeil ausgeführt sein. Als Material eignet sich neben Stahl, Edelstahl oder Aluminium.

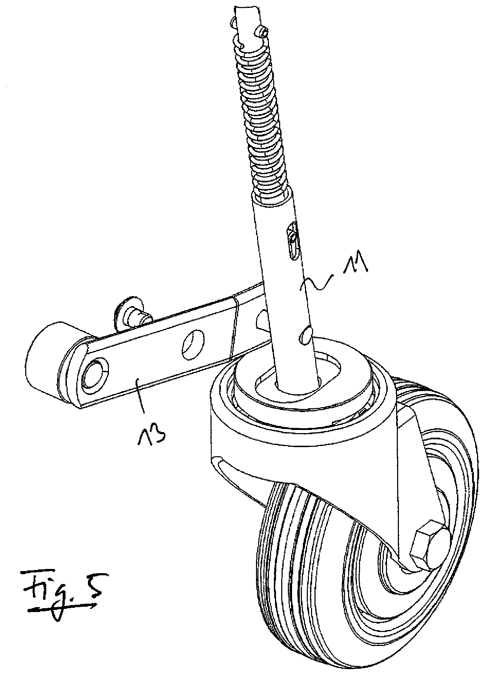

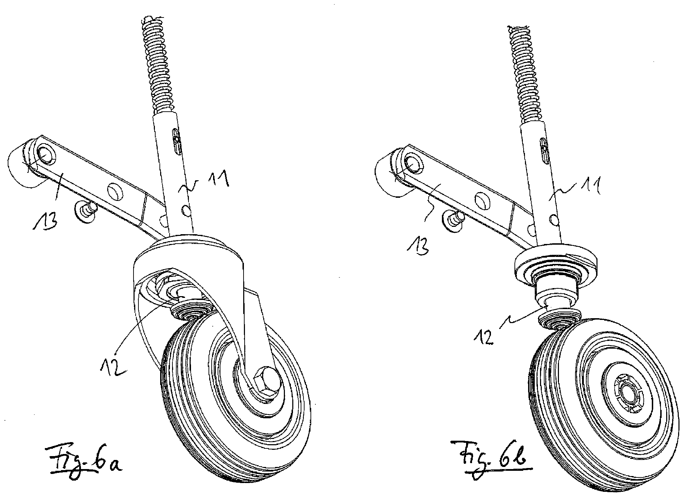

Die Figuren 5, 6a und 6b zeigen das Zusammenwirken von dem Ende der Bremsstange 11, der Bremslöseeinrichtung 13, dem Bremsteil 12 und der hinteren Rolle 4. Das Bremsteil 12 ist vorzugsweise als pilzförmiger Bremskopf ausgeführt. Oberhalb des Bremskopfes ist das Verbindungsteil 14 vorgesehen.

### Bezugszeichenliste

- 1: Wagen, Transportwagen
- 2: Fahrgestell
- 3: Rolle
- 4: hintere Rolle
- 5: Rollengabel
- 6: Ladeplattform
- 7: Rückseite (Wagen)
- 8: Holm
- 9: Schiebeeinrichtung
- 10: Bremsstange, Bremsgestänge
- 11: Ende der Bremsstange
- 12: Bremsteil
- 13: Bremslöseeinrichtung
- 14: Verbindungsteil
- 15: unterer Bereich (Verbindungsteil)
- 16: oberer Bereich (Verbindungsteil)
- 17: Vertiefung (Verbindungsteil)
- 18: waagrechter Holm

## Patentansprüche

1. Von Hand bewegbarer, stapelbarer Transportwagen mit einem Fahrgestell (2) an dem Rollen (3) und eine Ladeplattform (6) angeordnet sind, das Fahrgestell (2) weist ferner zwei an der Rückseite (7) des Wagens befindliche, nach oben gerichtete Holme (8) auf, an denen eine Schiebeeinrichtung (9) angebracht ist, wobei in den Holmen (8) zwei Bremsstangen (10) angeordnet sind, die durch die Schiebeeinrichtung (9) beeinflussbar sind, und wobei ferner am unteren Ende (11) der Bremsstange (10) ein Bremsteil (12) vorgesehen ist, das auf die hinteren Rollen (3, 4) wirkt, und wobei darüber hinaus jeweils eine Bremslöseeinrichtung (13) zum Anheben des Bremsteils (12) vorgesehen ist, wobei die hinteren Rollen (3, 4) als Lenkrollen ausgeführt sind, **dadurch gekennzeichnet, dass** die Bremslöseeinrichtunq (13) an Bremsstange (10) und Fahrgestell (2) angeordnet ist.

2. Von Hand bewegbarer, stapelbarer Transportwagen nach Anspruch 1, **dadurch gekennzeichnet, dass** die Bremslöseeinrichtung (13) am waagrechten Holm (18) angeordnet ist.

3. Von Hand bewegbarer, stapelbarer Transportwagen nach Anspruch 1, **dadurch gekennzeichnet, dass** die Holme (8) leicht gebogen ausgeführt sind.

4. Von Hand bewegbarer, stapelbarer Transportwagen nach einem der Ansprüche 1 bis 3, **dadurch gekennzeichnet, dass** das Bremsteil (12) schräg auf die hintere Rolle (4) wirkt.

5. Von Hand bewegbarer, stapelbarer Transportwagen nach Anspruch 1, **dadurch gekennzeichnet, dass** am Ende des Holms (8) zur Anbindung an die mit einer Rollengabel (5) versehene hintere Rolle (4) ein Verbindungsteil (14) vorgesehen ist.

6. Von Hand bewegbarer, stapelbarer Transportwagen nach Anspruch 5, **dadurch gekennzeichnet, dass** das Verbindungsteil (14) im unteren Bereich (15) mittels Presspassung in der Rollengabel (5) aufgenommen ist.

7. Von Hand bewegbarer, stapelbarer Transportwagen nach Anspruch 5, **dadurch gekennzeichnet, dass** das Verbindungsteil (14) im oberen Bereich (16) eine Vertiefung (17) zur formschlüssige Aufnahme des Holmes (8) aufweist.

8. Von Hand bewegbarer, stapelbarer Transportwagen nach Anspruch 7, **dadurch gekennzeichnet, dass** das Verbindungsteil (14) im oberen Bereich (16) mit dem Holm (8) umlaufend verschweißt ist.

9. Von Hand bewegbarer, stapelbarer Transportwagen nach Anspruch 5, **dadurch gekennzeichnet, dass** das Verbindungsteil (14) als Druckgussteil, Drehteil oder Frästeil ausgeführt ist.

10. Von Hand bewegbarer, stapelbarer Transportwagen nach Anspruch 5, **dadurch gekennzeichnet, dass** das Verbindungsteil (14) aus einem Stahl, Edelstahl oder Aluminium hergestellt ist.

## Claims

1. A manually movable, nestable transport trolley having a wheel frame (2) on which there are arranged casters (3) and a loading platform (6), the wheel frame (2) furthermore has two upwardly-directed members (8), located at the rear (7) of the trolley, to which a pushing arrangement (9) is attached, wherein two brake rods (10) are arranged in the members (8) and can be influenced by the pushing arrangement (9), and wherein furthermore at the lower end (11) of the brake rod (10) there is provided a brake part (12) which acts upon the rear casters (3, 4), and wherein moreover in each case there is provided a brake release device (13) for raising the brake part (12), wherein the rear casters (3, 4) are in the form of swivel casters, **characterised in that** the brake release device (13) is arranged on the brake rod (10) and the wheel frame (2).

2. A manually movable, nestable transport trolley according to claim 1, **characterised in that** the brake release device (13) is arranged on the horizontal member (18).

3. A manually movable, nestable transport trolley according to claim 1, **characterised in that** the members (8) are slightly curved.

4. A manually movable, nestable transport trolley according to any one of claims 1 to 3, **characterised in that** the brake part (12) acts obliquely upon the rear castor (4).

5. A manually movable, nestable transport trolley according to claim 1, **characterised in that** a connecting part (14) is provided at the end of the member (8), for fastening to the rear castor (4) provided with a castor fork (5).

6. A manually movable, stackable transport trolley according to claim 5, **characterised in that** the lower region (15) of the connecting part (14) is received in the castor fork (5) by means of a press fit.

7. A manually movable, nestable transport trolley according to claim 5, **characterised in that** the upper region (16) of the connecting part (14) has a recess (17) for form-locked receiving of the member (8).

8. A manually movable, stackable transport trolley according to claim 7, **characterised in that** the upper region (16) of the connecting part (14) is welded to the member (8) in an encircling manner.

9. A manually movable, stackable transport trolley according to claim 5, **characterised in that** the connecting part (14) is in the form of a die cast part, a turned part or a milled part.

10. A manually movable, nestable transport trolley according to claim 5, **characterised in that** the connecting part (14) is manufactured from steel, high-grade steel or aluminium.

## Revendications

1. Chariot de transport imbricable et déplaçable à la main, comprenant un châssis (2) sur lequel des roulettes (3) et une plate-forme de chargement (6) sont installées, lequel châssis (2) comporte, en outre, deux jambages (8) dirigés vers le haut, situés à la face postérieure (7) dudit chariot, et sur lesquels un dispositif de poussée (9) est implanté, lesdits jambages (8) renfermant deux barres de freinage (10) pouvant être influencées par ledit dispositif de poussée (9), une pièce de freinage (12), agissant sur les roulettes postérieures (3, 4), étant par ailleurs prévue à l'extrémité inférieure (11) de la barre de freinage (10), et un dispositif respectif (13) de neutralisation du freinage étant prévu, de surcroît, pour soulever ladite pièce de freinage (12), sachant que lesdites roulettes postérieures (3, 4) sont réalisées en tant que roulettes directrices, **caractérisé par le fait que** le dispositif (13) de neutralisation du freinage est implanté sur la barre de freinage (10) et sur le châssis (2).

2. Chariot de transport imbricable et déplaçable à la main, selon la revendication 1, **caractérisé par le fait que** le dispositif (13) de neutralisation du freinage est implanté sur le longeron horizontal (18).

3. Chariot de transport imbricable et déplaçable à la main, selon la revendication 1, **caractérisé par le fait que** les jambages (8) sont de réalisation légèrement arquée.

4. Chariot de transport imbricable et déplaçable à la main, selon l'une des revendications 1 à 3, **caractérisé par le fait que** la pièce de freinage (12) agit à l'oblique sur la roulette postérieure (4).

5. Chariot de transport imbricable et déplaçable à la main, selon la revendication 1, **caractérisé par le fait qu'**une pièce de liaison (14), dévolue à la mise en place sur la roulette postérieure (4) munie d'une fourche (5), est prévue à l'extrémité du jambage (8).

6. Chariot de transport imbricable et déplaçable à la main, selon la revendication 5, **caractérisé par le fait que** la pièce de liaison (14) est intégrée dans la fourche (5) de la roulette, par emboîtement à force dans la région inférieure (15).

7. Chariot de transport imbricable et déplaçable à la main, selon la revendication 5, **caractérisé par le fait que** la pièce de liaison (14) est dotée, dans la région supérieure (16), d'un renfoncement (17) conçu pour recevoir le jambage (8) par complémentarité de formes.

8. Chariot de transport imbricable et déplaçable à la main, selon la revendication 7, **caractérisé par le fait que** la pièce de liaison (14) est soudée au jambage (8) à la périphérie, dans la région supérieure (16).

9. Chariot de transport imbricable et déplaçable à la main, selon la revendication 5, **caractérisé par le fait que** la pièce de liaison (14) est réalisée en tant que pièce moulée sous pression, pièce tournée ou pièce fraisée.

10. Chariot de transport imbricable et déplaçable à la main, selon la revendication 5, **caractérisé par le fait que** la pièce de liaison (14) est fabriquée en un acier, en un acier inoxydable ou en aluminium.
